# EUROPÄISCHE PATENTANMELDUNG

(11) **EP 1 515 336 A2**
(43) Veröffentlichungstag der Anmeldung: **16.03.2005**
(21) Anmeldenummer: 04090348.6
(22) Anmeldetag: 10.09.2004
(51) Int. Cl.: G11B 23/40

(54) **Optischer Informationsträger**

(30) Priorität: 11.09.2003 DE 20314201 U
(71) Anmelder: DOCdata Germany Berlin Optical Disc GmbH, 13355 Berlin (DE)
(72) Erfinder: Weiss, Volker, Dr., 13355 Berlin (DE); Grabinski, Michael, 13355 Berlin (DE)
(74) Vertreter: Jungblut, Bernhard Jakob, Dr.

(57) **Zusammenfassung**

Die Erfindung betrifft einen optischen Informationsträger (1) mit einer optisch transparenten Trägerscheibe (2), mit in einem ersten Teilbereich (3,3') der Trägerscheibe (2) aufgebrachten maschinenlesbaren Informationen, mit einem zweiten Teilbereich (4), welcher frei von maschinenlesbaren Informationen ist, wobei im Bereich des zweiten Teilbereichs (4) auf einer Seite der Trägerscheibe (2) eine Bedruckung (5,5') mit personenlesbaren Informationen aufgebracht ist, wobei die Bedruckung (5,5') zumindest zwei Schichten (6,6') aufweist, wobei die der Trägerschicht näher liegende erste Schicht (6) personenlesbare Informationen in Spiegelschrift trägt und wobei die der Trägerscheibe (1) gegenüberliegende, bezogen auf die erste Schicht (6), zweite Schicht (6') personenlesbare Informationen in Normalschrift trägt, wobei die personenlesbaren Informationen der ersten Schicht (6) und der zweiten Schicht (6') gleich oder verschieden sein können.

## Beschreibung

### Gebiet der Erfindung.

Die Erfindung betrifft einen optischen Informationsträger mit einer optisch transparenten Trägerscheibe, mit auf einem ersten Teilbereich der Trägerscheibe aufgebrachten maschinenlesbaren Informationen, mit einem zweiten Teilbereich, welcher vorzugsweise frei von maschinenlesbaren Informationen ist, wobei auf einer Seite der Trägerscheibe eine Bedruckung mit personenlesbaren Informationen aufgebracht ist, wobei die Bedruckung eine Schicht mit personenlesbaren Informationen in Normalschrift umfasst.

### Stand der Technik.

Aus der Praxis sind optische Informationsträger des eingangs genannten Aufbaus bekannt. Hierbei sind auf der einen Seite der optisch transparenten Trägerscheibe die maschinenlesbaren Informationen, beispielsweise im CD-, DVDoder ROM-Format, aufgebracht. Dies ist bei Betrachtung mit dem menschlichen Auge als metallisch reflektierende Schicht erkennbar. Die maschinenlesbaren Informationen sind mit bloßem Auge dagegen nicht lesbar. Damit eine Bedienperson einen optischen Informationsträger der darauf enthaltenen Information zuordnen kann, ist es daher zweckmäßig, zusätzlich personenlesbare Informationen anzubringen. Dies wird meist durch Bedruckung des optischen Informationsträgers eingerichtet, wobei die Bedruckung auf der den maschinenlesbaren Informationen gegenüberliegenden Seite der transparenten Trägerscheibe angebracht ist.

Eine Bedruckung der vorstehenden Art ist jedoch bei beidseitig lesbaren optischen Informationsträgern nicht möglich. Ein Beispiel für einen beidseitig lesbaren optischen Informationsträger ist die DVD-10. Bei der DVD-10 werden nämlich beide Seiten der optisch transparenten Trägerscheibe zur Aufbringung von maschinenlesbaren Informationen benötigt. Die bisher angenommene Unmöglichkeit der Anbringung von Bedruckungen auf DVD-10 stört in mehrerlei Hinsicht. Zum einen kann eine Bedienperson keine Zuordnung treffen, wenn beispielsweise mehrere DVD-10 gehandhabt werden. Die Gefahr der Verwechslung ist extrem groß. Im Ergebnis muss eine Bedienperson in einem solchen Falle jede DVD-10 ausprobieren, bis die gewünschte identifiziert ist. Dies ist zeitraubend. Des Weiteren kann nicht ohne weiteres von einer Bedienperson erkannt werden, welche Seite mit welchen maschinenlesbaren Informationen versehen ist. Schließlich ist es aus Sicht der Anbieter von DVD-10 regelmäßig wünschenswert ergänzende Informationen sowie Werbung auf das Medium anzubringen.

### Technisches Problem der Erfindung.

Der Erfindung liegt das technische Problem zu Grunde, einen beidseitig lesbaren optischen Informationsträger anzugeben, welcher zusätzlich eine Bedruckung aufweist. Dabei soll die Herstellung einfach sein. Insbesondere sollte auch eine Zuordnung zwischen den personenlesbaren Informationen und den maschinenlesbaren Informationen der jeweiligen Seiten unschwer möglich sein.

### Grundzüge der Erfindung und bevorzugte Ausführungsformen.

Zur Lösung dieses technischen Problems lehrt die Erfindung einen optischen Informationsträger mit einer optisch transparenten Trägerscheibe, mit auf einen ersten Teilbereich der Trägerscheibe aufgebrachten maschinenlesbaren Informationen, mit einem zweiten Teilbereich, welcher vorzugsweise frei von maschinenlesbaren Informationen ist, wobei im Bereich des zweiten Teilbereichs auf einer Seite der Trägerscheibe eine Bedruckung mit personenlesbaren Informationen aufgebracht ist, wobei die Bedruckung zumindest zwei Schichten aufweist, wobei die der Trägerscheibe näher liegende erste Schicht personenlesbare Informationen in Spiegelschrift trägt und wobei die der Trägerscheibe gegenüberliegende, bezogen auf die erste Schicht, zweite Schicht personenlesbare Informationen in Normalschrift trägt, wobei die personenlesbaren Informationen der ersten und der zweiten Schicht gleich oder verschieden sein können.

Der Ausdruck "frei von maschinenlesbaren Informationen" meint frei von maschinenlesbaren Informationen, wie im ersten Teilbereich aufgebracht. Maschinenlesbare Informationen sind solche Informationen, welche ausschließlich mit geeigneten optischen Sensormitteln, beispielsweise Laser geeigneter Abspielgeräte, ausgelesen werden können. Personenlesbare Informationen sind Informationen, welche von einer Bedienperson ohne weitere Hilfsmittel gelesen werden können. Dies schließt jedoch nicht aus, dass die personenlesbaren Informationen auch maschinenlesbar sind. Schließlich können die personenlesbaren Informationen auch ausschließlich maschinenlesbare Informationen anderer Art, als im ersten Teilbereich, aufweisen.

Mit der Erfindung wird zunächst erreicht, dass eine Bedienperson ohne Weiteres einen erfindungsgemäßen optischen Informationsträger der darauf enthaltenen Information zuordnen kann. Durch die Ausgestaltung der ersten Schicht mit personenlesbaren Informationen in Spiegelschrift sowie der zweiten Schicht mit personenlesbaren Informationen in Normalschrift wird zudem erreicht, dass unterschiedliche personenlesbare Informationen anbringbar sind, und zwar jeweils bezogen auf die zugeordnete Seite des optischen Informationsträgers bzw. der darauf angebrachten maschinenlesbaren Information. Hinzu kommt, dass ein erfindungsgemäßer optischer Informationsträger besonders einfach herstellbar ist, da, wie im Stand der Technik, lediglich eine Seite zu bedrucken ist. Trotz der Verdoppelung der personenlesbaren Informationen kann also mit herkömmlichen Druckmaschinen gearbeitet werden.

Vorzugsweise sind der erste und der zweite Teilbereich ringförmig, wobei der zweite Teilbereich in radialer Richtung innenliegend ist. Man erhält im Ergebnis einen optischen Informationsträger, welcher im Hinblick auf Anordnung der verschiedenen Informationsbereiche einer klassischen Vinyl-Schallplatte entspricht. Die Bedruckungen können dabei bis zum Innenring bzw. dem Loch verlaufen.

Im einfachsten Fall sind die erste und die zweite Schicht einfarbig, weisen also farbige, nicht-transparente sowie freie, also transparente, Bereiche auf. Dann kann es sich empfehlen, dass zwischen der ersten und der zweiten Schicht eine nicht-transparente Trennschicht angeordnet ist. Im Einzelnen ist es jedoch bevorzugt, wenn die erste und/oder die zweite Schicht jeweils eine Siebdruckschicht mit jeweils bis zu 6 Farbschichten unterschiedlicher Farbe sind.

Im Folgenden wird die Erfindung anhand von lediglich ein Ausführungsbeispiel darstellenden Figuren näher erläutert.

Es zeigen:
- Fig.1:: Ansicht einer unbedruckten DVD-10 von beiden Seiten (a bzw. b),
- Fig.2:: Eine erfindungsgemäße DVD-10 mit einer ersten Schicht enthaltend personenlesbare Informationen in Spiegelschrift (a: Aufsicht auf die Druckseite, b: Aufsicht auf die der Druckseite gegenüberliegende Seite),
- Fig.3:: Eine erfindungsgemäße DVD-10 mit einer ersten Schicht enthalten personenlesbarer Informationen in Spiegelschrift sowie einer zweiten Schicht mit per sonenlesbaren Informationen in Normalschrift (a: Aufsicht auf die Druckseite, b: Aufsicht auf die der Druckseite gegenüberliegende Seite), und
- Fig.4:: Querschnitt durch den Gegenstand der Fig.3.

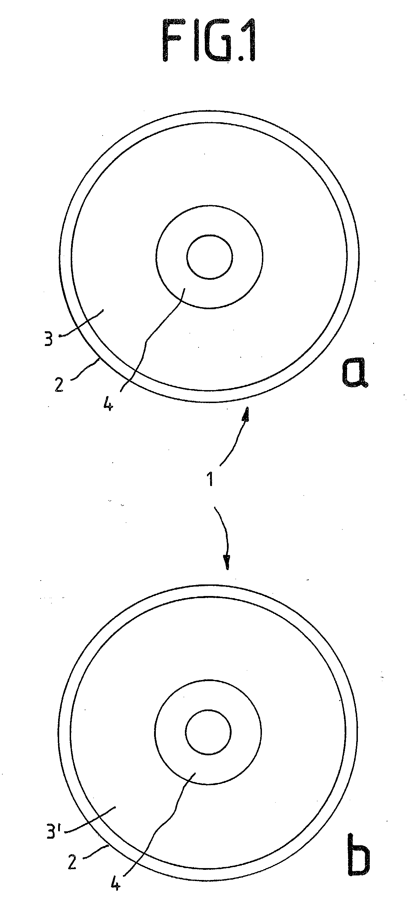

Bei dem optischen Informationsträger 1 der Darstellung der Fig. 1 handelt es sich um eine DVD-10. Anstelle einer DVD-10 kann es sich aber auch um eine DVD[+], DVD extra oder ähnlichbeidseitig lesbare Formate handeln (z.B. 80 oder 120 mm). Sie weist eine optisch transparente Trägerscheibe 2 auf, wobei auf einem ersten Teilbereich 3,3' maschinenlesbare Informationen aufgebracht sind. Die maschinenlesbaren Informationen der einander gegenüberliegenden Teilbereiche 3,3' sind unterschiedlich und nur von der jeweiligen Seite lesbar. Des Weiteren erkennt man eine zweiten Teilbereich 4, welcher frei von maschinenlesbaren Informationen ist.

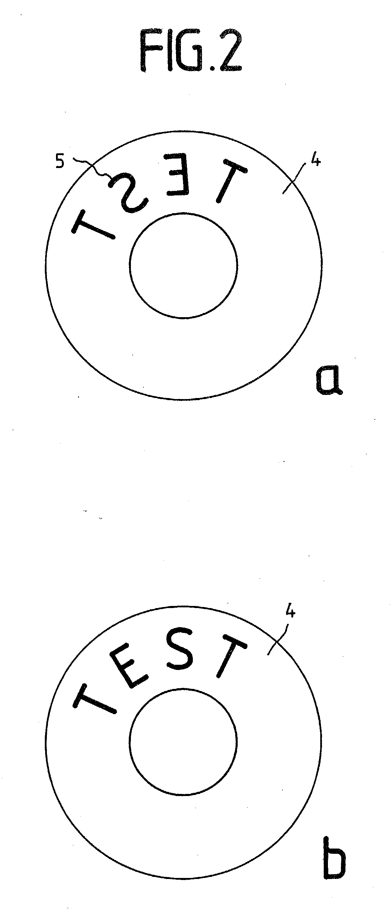

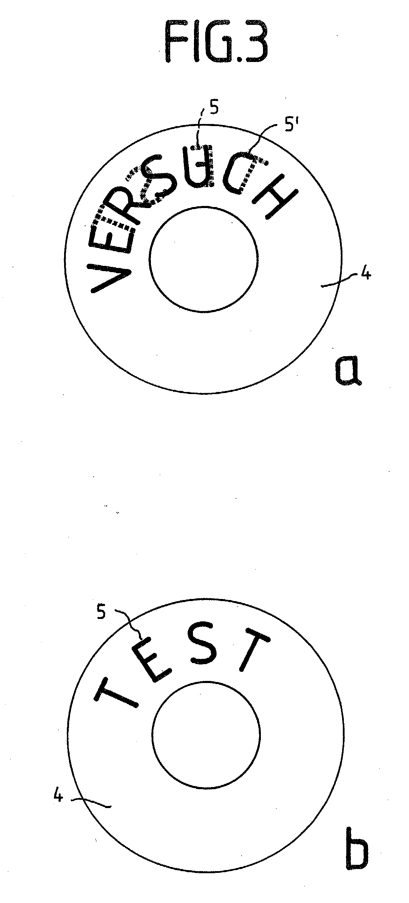

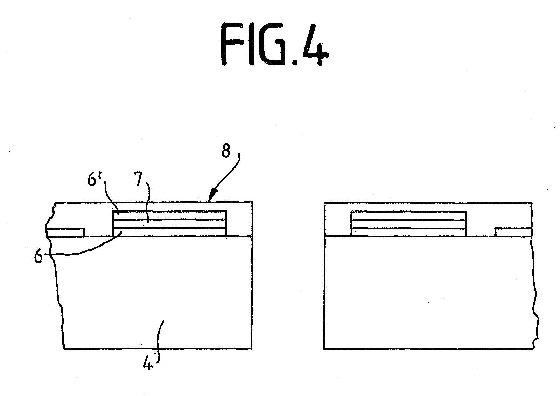

Erfindungsgemäß ist im Bereich des zweiten Teilbereichs 4 auf einer Seite der Trägerscheibe 2 eine Bedruckung mit personenlesbaren Informationen aufgebracht. Aufbau und Verfahren der Aufbringung der Bedruckung wird aus einer vergleichenden Betrachtung der Fig. 2, 3 und 4 deutlich. Dabei stellen die jeweiligen Teile a der Fig. 2 und 3 eine Aufsicht auf jene Seite des optischen Informationsträgers 1 dar, auf welche die Bedruckung aufgebracht wird. Die Darstellungen der Fig. 2 und 3 sind vergrößerte Ausschnitte aus dem Gegenstand der Fig. 1. Die Fig. 4 ist eine Querschnittsdarstellung des Gegenstandes der Fig. 3. Durch vergleichende Betrachtung der Fig. 2 und 4 erkennt man, dass zunächst eine erste Schicht 6 mit personenlesbaren Informationen in Spiegelschrift aufgebracht wird. Bei Betrachtung der der Druckseite gegenüberliegenden Seite des optischen Informationsträgers 1 (Fig. 2b) erscheint die personenlesbare Information in Normalschrift. Einer vergleichenden Betrachtung der Fig. 3 und 4 entnimmt man, dass , bezogen auf die erste Schicht 6, eine der Trägerscheibe 2 gegenüberliegende zweite Schicht 6', welche personenlesbare Informationen in Normalschrift trägt, aufgebracht ist. Die personenlesbaren Informationen der ersten Schicht 6 und der zweiten Schicht 6' sind im Ausführungsbeispiel verschieden. Im Ergebnis kann eine Bedienperson bei Betrachtung der Druckseite einer erfindungsgemäßen DVD-10 (Fig. 3a) die der betreffenden Seite zugeordnete personenlesbare Information lesen. Dagegen kann die der gegenüberliegenden Seite zugeordnete personenlesbare Information nach Drehen der DVD-10 ebenfalls ohne Weiteres gelesen werden (Fig. 3b). Die Zuordnung der jeweiligen personenlesbaren und maschinenlesbaren Informationen kann gleichseitig (zugeordnete Informationen auf der gleichen Seite) oder gegenüberseitig sein. Anhand der Fig.4 erkennt man, dass dennoch lediglich eine Bedruckung einer Seite der DVD-10 notwendig ist. Im Ausführungsbeispiel sind die erste Schicht 6 und die zweite Schicht 6'jeweils ein Mehrfarben-Siebdruck in 3 Teilschichten. zur vermeidung von Überlagerungseffekten ist zwischen der ersten Schicht 6 und der zweiten Schicht 6' eine nicht-transparente Trennschicht 7 eingerichtet. Es versteht sich, dass eine transparente Deckschicht 8 angebracht sein kann.

## Patentansprüche

1. Optischer Informationsträger (1) mit einer optisch transparenten Trägerscheibe (2),
mit in einem ersten Teilbereich (3,3') der Trägerscheibe (2) aufgebrachten maschinenlesbaren Informationen,
mit einem zweiten Teilbereich (4), welcher frei von maschinenlesbaren Informationen ist,
wobei im Bereich des zweiten Teilbereichs (4) auf einer Seite der Trägerscheibe (2) eine Bedruckung (5,5') mit personenlesbaren Informationen aufgebracht ist,
wobei die Bedruckung (5,5') zumindest zwei Schichten (6,6') aufweist,
wobei die der Trägerschicht näher liegende erste Schicht (6) personenlesbare Informationen in Spiegelschrift trägt und
wobei die der Trägerscheibe (1) gegenüberliegende, bezogen auf die erste Schicht (6), zweite Schicht (6') personenlesbare Informationen in Normalschrift trägt,
wobei die personenlesbaren Informationen der ersten Schicht (6) und der zweiten Schicht (6') gleich oder verschieden sein können.

2. Optischer Informationsträger (1) nach Anspruch 1, wobei der erste Teilbereich (3) und der zweite Teilbereich (4) ringförmig sind und wobei der zweite Teilbereich (4) in radialer Richtung innenliegend ist.

3. Optischer Informationsträger (1) nach Anspruch 1 oder 2, wobei zwischen der ersten Schicht (6) und der zweiten Schicht (6') eine nicht-transparente Trennschicht (7) angeordnet ist.

4. Optischer Informationsträger (1) nach einem der Ansprüche 1 bis 3, wobei die erste Schicht (6) und/oder die zweite Schicht (6') jeweils eine Siebdruckschicht mit jeweils bis zu 6 Farbschichten ist.
